# EUROPEAN PATENT APPLICATION

(11) **EP 3 868 466 A1**
(43) Date of publication of application: **25.08.2021**
(21) Application number: 19874172.0
(22) Date of filing: 10.09.2019
(51) Int. Cl.: B01J 19/20

(54) **BATCH REACTOR**

(30) Priority: 15.10.2018 KR 20180122819
(71) Applicant: Hanwha Solutions Corporation, Jung-gu Seoul 04541 (KR)
(72) Inventor: AHAN, Woo Youl, Daejeon 35205 (KR); LEE, Shin Beom, Daejeon 34022 (KR); KANG, Paul, Seoul 04558 (KR); KIM, Yang Jung, Daejeon 34127 (KR); LEE, Jae Hyuk, Daejeon 34061 (KR)
(74) Representative: Berggren Oy
(86) International application number: PCT/KR2019/011748
(87) International publication number: WO 2020/080680

(57) **Abstract**

A batch reactor of the present disclosure includes: a cylindrical reactor body; a supply nozzle for supplying a raw material; at least one or more curved impellers; and a rotating shaft connected to the curved impellers, wherein the curved impellers include bent stirring wings, and the batch reactor is used for a VAE (vinyl acetate-ethylene) polymerization reaction

## Description

### [TECHNICAL FIELD]

### Cross Citation with Related Application(s)

This application claims the benefit of Korean Patent Application No. 10-2018-0122819 filed on October 15, 2018 with the Korean Intellectual Property Office, the disclosure of which is incorporated herein by reference in its entirety.

The present disclosure relates to a batch reactor, and more particularly to a batch reactor equipped with an impeller.

### [BACKGROUND ART]

VAE (vinyl acetate-ethylene) is a term meaning a copolymer of ethylene and vinyl acetate, and VAE polymerization reaction is performed through an addition polymerization of ethylene and vinyl acetate, and a batch reactor equipped with an impeller may be used.

A conventional batch reactor includes a reactor body for charging reactants, an impeller installed inside the reactor body to stir the reactants, and a drive motor for rotating the impeller.

In general, the batch exothermic reaction process requires appropriate control of the internal temperature of the reaction chamber in order to produce a uniform product, increase productivity, and improve quality stability of the product. Therefore, the batch reactor may include a reactor jacket, a baffle, an external heat exchanger, and the like as a configuration for controlling the temperature of the reactant. VAE polymerization is also essentially required to maintain the temperature inside the reactor due to high reaction heat, and an external heat exchanger is mainly used.

The external heat exchanger can continuously conduct heat exchange through the circulation of a high flow rate to well maintain the temperature of the reactor. A reactor equipped with an external heat exchanger is designed so that the ratio of the height of the batch reactor to the diameter of the batch reactor is 1.5 or more in order to increase the residence time in the reactor. However, when the ratio of the height of the batch reactor to the diameter of the batch reactor increases, a restriction occurs in the mixing between the upper portion and the lower portion of the batch reactor, and the temperature deviation between the upper portion and the lower portion occurs, which has an adverse effect on the quality of the final product.

Further, in order to increase the stability of particles, the strain rate (1/sec) must be small in the reactor. If the stability of particles is broken, an abnormal polymerization occurs and a reaction heat increases explosively, which causes the particles to become entangled with each other.

Therefore, in a batch exothermic reaction, particularly in a VAE polymerization reaction, the design of batch reactors that ensure the stability of particles while showing optimum stirring performance and reaction efficiency is underway.

### [DETAILED DESCRIPTION OF THE INVENTION]

### [Technical Problem]

Embodiments of the present disclosure has been designed to solve the above-mentioned problems, and an object of the present disclosure is to provide a reactor that can maintain the flow of reactants in the reactor uniformly in each region and increase the reaction rate in a VAE polymerization reaction.

### [Technical Solution]

A batch reactor according to the embodiments of the present disclosure includes: a cylindrical reactor body; a supply nozzle for supplying a raw material; at least one or more curved impellers; and a rotating shaft connected to the curved impellers, wherein the curved impellers include bent stirring wings and the batch reactor is used for a VAE (vinyl acetate-ethylene) polymerization reaction.

The cylindrical reactor body may include a side wall portion, a bottom portion and a cover portion, and the supply nozzle may be connected to the bottom portion.

The stirring wing may be bent in a direction opposite to the rotation direction of the curved impeller in the circumferential direction of the cylindrical reactor body.

The stirring wing may be raised and bent in the height direction of the rotation shaft as it separates farther from the rotating shaft.

The rotation diameter of the curved impeller may be 0.2 to 0.6 times the diameter of the cylindrical reactor body.

The curved impeller may be composed of at least two or more, the at least two or more curved impellers may be arranged to be separated along the height direction of the rotating shaft, and the ratio of the spacing between the adjacent curved impellers to the rotation diameter of the curved impeller may be 2 to 4.

The diameter of the supply nozzle may be between 0.125 and 8 inches.

The raw material may include ethylene.

### [ADVANTAGEOUS EFFECTS]

According to the embodiments of the present disclosure, a batch reactor capable of securing the particle stability of reactants by applying a curved impeller to a batch reactor for VAE polymerization, and enhancing the reaction rate by optimizing the position of the reactant supply nozzle can be implemented.

### [BRIEF DESCRIPTION OF THE DRAWINGS]

FIG. 1 is a schematic diagram of a batch reactor according to one embodiment of the present disclosure.
FIG. 2 is a schematic cross-sectional view of a batch reactor taken along the line I-I' of FIG. 1.
FIG. 3 is a schematic diagram of a batch reactor according to Comparative Example 1.
FIG. 4 is a schematic diagram of a batch reactor according to Comparative Example 2.
FIG. 5 is a schematic diagram of a batch reactor according to Comparative Example 3.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

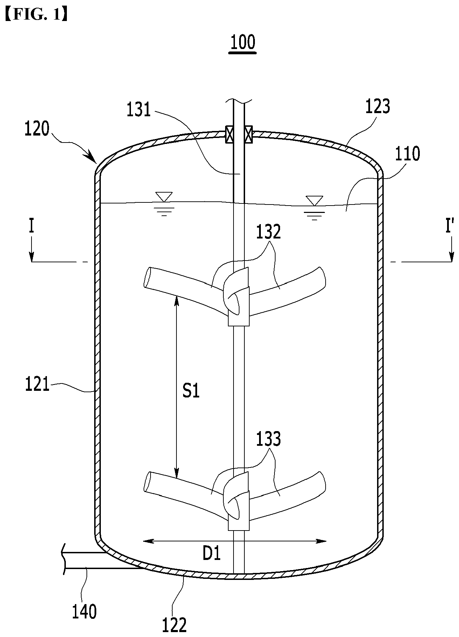

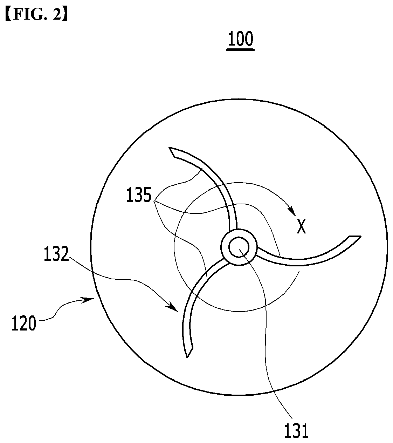

FIG. 1 is a schematic diagram of a batch reactor according to one embodiment of the present disclosure. FIG. 2 is a schematic cross-sectional view of a batch reactor taken along the line I-I' of FIG. 1.

Referring to FIGS. 1 and 2, a batch reactor 100 according to one embodiment of the present disclosure includes a cylindrical reactor body 120; a supply nozzle 140 for supplying a raw material; at least one or more curved impellers 132 and 133; and a rotating shaft 131 connected to the curved impellers 132 and 133, wherein the curved impellers 132 and 133 include bent stirring wing 132.

The cylindrical reactor body 120 may include a side wall portion 121, a bottom portion 122 and a cover portion 123, and the supply nozzle 140 may be connected to the bottom portion 122.

The stirring wing 135 may be bent in a direction opposite to the rotation direction (X-direction) of the curved impeller 132 in the circumferential direction of the cylindrical reactor body 120. The bending degree of the stirring wing is 45 to 100 degrees. Further, as it separates farther from the rotation shaft 131, it can be in the form of being risen and bent in the height direction of the rotation shaft 131, and more specifically, may be in the form of being twisted and bent. The rising degree may be 5 to 40 degrees, and the twisting degree may be 5 to 45 degrees.

The rotation speed of the curved impellers 132 and 133 varies depending on the production amount and the reactor size, but is preferably 100 rpm to 1000 rpm, and more preferably 200 rpm to 300 rpm.

The rotation diameter (D1) of the curved impellers 132 and 133 is preferably 0.2 to 0.6 times the diameter of the cylindrical reactor body 120 in consideration of the operating speed and power of the reactor in the VAE polymerization reaction.

Further, although not shown, the batch reactor 100 may further include a baffle located between the cylindrical reactor body 120 and the curved impellers 132 and 133. The baffle (not shown) changes the circumferential flow of the reactant 110 in the vertical direction according to the rotation of the curved impellers 132 and 133 to improve mixing of the reactant, and keep the temperature of the reactant constant through heat exchange between the reactant and the fluid flowing inside the pipe of the baffle (not shown). Since the shape thereof is not limited, it may be a plate shape, a double pipe or a coil type, and a plate shape is most preferred.

The batch reactor 100 of the present disclosure may be used as a reactor for polymer polymerization. In particular, it is preferably a polymerization reactor for the VAE polymerization reaction. In general, a high rotational speed of a batch reactor is required for the VAE polymerization reaction. However, the stability of the particles may be broken due to high-speed stirring, and when the stability of particles is broken, reaction heat is generated due to an abnormal polymerization, and there may be a problem that the particles are entangled with each other. Thus, the batch reactor 100 according to one embodiment of the present disclosure can solve the above-mentioned problems by applying a curved impeller 132 and 133, not a conventional helical ribbon type impeller, in the VAE polymerization reaction.

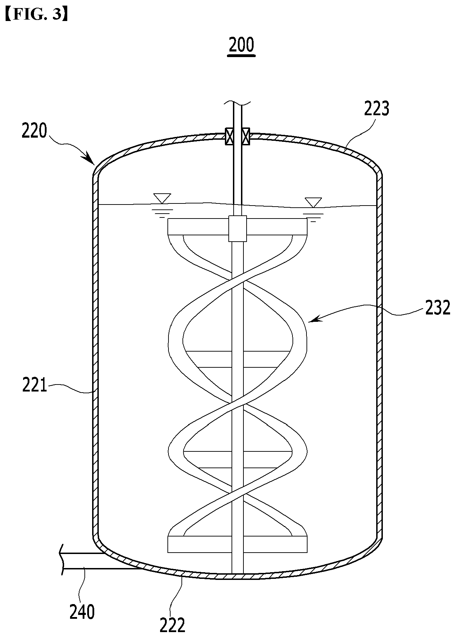

FIG. 3 is a schematic diagram of a batch reactor according to Comparative Example 1.

Referring to FIG. 3, the batch reactor 200 according to Comparative Example 1 includes a cylindrical reactor body 220 and a supply nozzle 240, and the cylindrical reactor body 220 includes a side wall portion 221, a bottom portion 222, and a cover portion 223. That is, the reactor has a configuration similar to or identical to that of the batch reactor 100 according to the embodiments of the present disclosure, except for the helical ribbon type impeller 232. In order to improve the stability of particles in the VAE polymerization reaction, the strain rate in the reactor must be small.

The strain rate is a value indicating the rate at which strain occurs, and it means how much strain has been made in a plane two-dimensionally and in a space three-dimensionally. Referring again to FIGS. 1 to 3, in the case of the curved impellers 132 and 133 of the present disclosure, the stirring wing 135 is formed in a curved shape, and the bending direction is the opposite direction of the rotation direction (X), so that the strength of turbulence is small, which results in a smaller strain rate than the helical ribbon type impeller 232 according to Comparative Example 1.

Further, when compared with the conventional helical ribbon type impeller, the curved impeller of the present disclosure may increase the gas holdup and improve the speed of the polymerization reaction through the optimization of the position of the supply nozzle in the VAE polymerization reaction.

Meanwhile, referring again to FIG. 1, the curved impellers 132 and 133 may be composed of at least two or more, and the at least two or more curved impellers 132 and 133 are arranged to be separated along the height direction of the rotation shaft 132. It is preferable that the ratio of the spacing S1 between the adjacent curved impellers 132 and 133 to the rotation diameter D1 of the curved impellers 132 and 133 is 2 to 4. If the ratio is less than 2, interference occurs between the curved impellers 132 and 133, and rather the mixing time is longer. If the ratio is greater than 4, the number of curved impellers 132 and 133 required for mixing is reduced, so that smooth mixing is not performed, and the mixing time is increased. The mixing time is a measurement of the time when the standard deviation of the concentration value at each point of the upper portion, the middle portion and the lower portion of the batch reactor becomes 1E-05 or less, and means that as the mixing time is lower, the polymerization reaction in the batch reactor occurs uniformly in each region.

Referring again to FIG. 1, the supply nozzle 140 for supplying raw materials is connected to the bottom portion 122 of the cylindrical reactor body 120. The VAE polymerization reaction is a polymerization reaction between ethylene, which is a gas, and vinyl acetate, which is a liquid. The raw material supplied through the supply nozzle 140 may include ethylene. In the VAE polymerization reaction, when the temperature of the batch reactor is raised to approximately 50°C, ethylene and an initiator are charged into a solvent such as distilled water in which a vinyl acetate monomer and a surfactant are dissolved, via the supply nozzle 140. Since ethylene charged at the above temperature is a gas and has a relatively low density, it is floated within the reactant 110. Therefore, when the supply nozzle 140 is located at the bottom portion 122, which is the lowermost end part of the cylindrical reactor body 120, during the VAE polymerization reaction, ethylene as a raw material is effectively supplied to the entire batch reactor 100, and the polymerization reaction of the reactants can be maintained uniformly for each region. Further, by placing the supply nozzle 140 at the lowermost end, the gas holdup can be increased, and the speed of the polymerization reaction can be improved. In conclusion, it is possible to implement a batch reactor that can produce a uniform product in a shorter time, increase productivity and improve product quality stability.

Further, the diameter of the supply nozzle 140 is preferably 0.125 to 8 inches. If the diameter of the supply nozzle 140 is less than 0.125 inches, the supply speed of the raw material is too fast and thus, there is a problem that the pipe wall thickness of the supply nozzle must be thick, and there is a concern that an impact is applied to the batch reactor 100. If the diameter of the supply nozzle 140 is greater than 8 inches, the supply rate of the raw material is too slow and thus, there is a problem that the raw material cannot effectively penetrate into the internal fluid.

Then, in the following, a batch reactor according to the present disclosure will be described with reference to specific examples and comparative examples.

### Example 1

As shown in FIG. 1, the reactant 110 is charged into a batch reactor 100 including two curved impellers 132 and 133, and then stirred at a power of 110W and a speed of 315rpm. The reactant 110 is 50.5 wt.% of vinyl acetate ethylene (VAE), 0.1 wt.% of polyvinyl alcohol (PVA), 2.1 wt.% of vinyl acetate monomer (VAM), 0.5 wt.% of ethylene, and 42.4 wt.% of distilled water, and ethylene is supplied via a supply nozzle 140 connected to the bottom portion 122. The rotation diameter (D1) of the curved impellers 132 and 133 is 0.2m, and the spacing S1 between the curved impellers 132 and 133 is 0.6m. The ratio of the spacing S1 between the curved impellers 132 and 133 to the rotation diameter D1 of the curved impellers 132 and 133 is 3. The ratio of the height to the diameter of the cylindrical reactor body 120 is 2, and the temperature in the batch reactor 100 is maintained at 80°C and the pressure is maintained at 80 bar(g).

### Comparative Example 1

A batch reactor 200 including a helical ribbon type impeller 232 as shown in FIG. 3 was used, the cylindrical reactor body 220 including the side wall portion 221, the bottom portion 222, and the cover portion 223, and the supply nozzle 240 connected to the bottom portion 222 are the same as that of Example 1. The same raw materials as in Example 1 were injected. The operation was performed under the same conditions as in Example 1 except that they were, stirred at a speed of 335 rpm for 110 W of electric power.

### Comparative Example 2

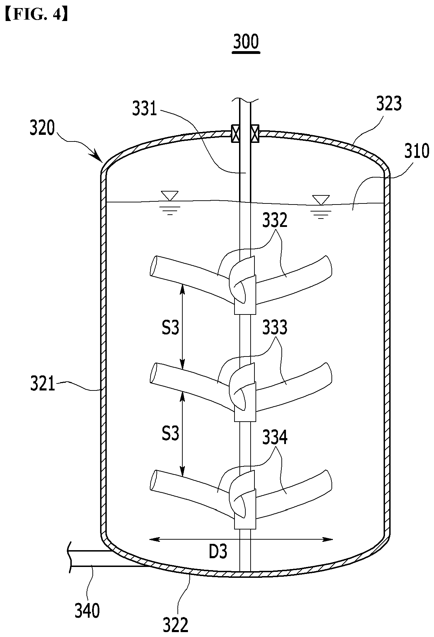

A batch reactor 300 including three curved impellers 332, 333 and 334 as shown in FIG. 4 was used, and the cylindrical reactor body 320 including a side wall portion 321, a bottom portion 322 and a cover portion 323, the supply nozzle 340 connected to a bottom portion 322, the reactant 310, and the rotation shaft 331 were the same as in Example 1. The rotation diameter (D3) of the curved impellers 332, 333 and 334 was 0.2m, the spacing (S3) between the curved impellers 332, 333 and 334 was 0.3m, and the ratio of the spacing S3 between the curved impellers 332, 333 and 334 to the rotation diameter D3 of the curved impellers 332, 333 and 334 was 1.5. The same raw materials as in Example 1 were injected. The operation was performed under the same conditions as in Example 1 except that they were stirred at a speed of 300 rpm for 110 W of electric power.

### Comparative Example 3

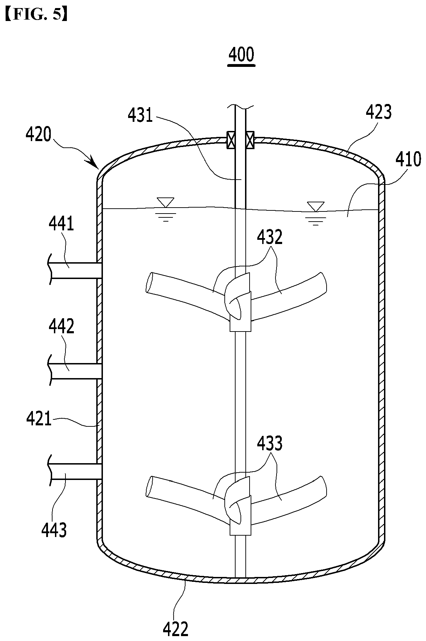

A batch reactor 400 including an upper supply nozzle 441, a middle supply nozzle 442, and a lower supply nozzle 443 located on the side wall portion 421 as shown in FIG. 5 was used. The cylindrical reactor body 420 including a side wall portion 421, a bottom portion 422 and a cover portion 423, the rotation shaft 431, the reactant 410 and the two curved impellers 432 and 433 were the same as in Example 1. The upper supply nozzle 441 was located 0.7m apart from the bottom portion 422, the middle supply nozzle 442 was located 0.4m apart from the bottom portion 422, and the lower supply nozzle 443 is located 0.1m apart from the bottom portion 422. The same raw materials as in Example 1 were operated under the same conditions as in Example 1.

### Evaluation Example 1: Strain rate

In order to compare the stability of particles in the VAE polymerization reaction, the strain rates of Example 1 and Comparative Example 1 were measured, and shown in Table 1 below.

**[Table 1]**

| | Impeller type | Strain rate (1/sec) |
|---|---|---|
| Example 1 | Curved impeller | 10 |
| Comparative Example 1 | Helical ribbon | 15 |

Through Table 1, it can be seen that in the VAE polymerization reaction, the case of Example 1 using the curved impeller exhibits a lower strain rate than that of the case of Comparative Example 1 using the helical ribbon.

### Evaluation Example 2: Mixing time

In order to compare the mixing efficiency in the VAE polymerization reaction, the mixing time of Example 1 and Comparative Example 2 was measured, and shown in Table 2 below. In Table 2, S/D means the ratio of the spacing between the curved impellers to the rotation diameter of the curved impeller.

**[Table 2]**

| | Number of curved impeller | S/D | Mixing time (sec) |
|---|---|---|---|
| Example 1 | 2 | 3 | 74 |
| Comparative Example 2 | 3 | 1.5 | 153 |

Through Table 2, it was confirmed that in the case of Comparative Example 2, since the ratio of the spacing between the curved impellers to the rotation diameter of the curved impeller is less than 2, despite the larger number of curved impellers, a significantly higher mixing time was measured as compared with Example 1.

### Evaluation Example 3: Gas holdup

In order to compare the reaction rate in the VAE polymerization reaction, the gas holdup of Example 1 and Comparative Example 1 was measured, and shown in Table 3 below, and the gas holdup of Example 1 and Comparative Example 3 was measured and shown in Table 4 below.

**[Table 3]**

| | Impeller type | Gas holdup (%) |
|---|---|---|
| Example 1 | Curved impeller | 5.6 |
| Comparative Example 1 | Helical ribbon | 4.2 |

Through Table 3, it was confirmed that the curved impeller of the present disclosure exhibits an increased VAE polymerization reaction rate as compared with the helical ribbon type impeller

**[Table 4]**

| | Position of supply nozzle | Gas holdup (%) |
|---|---|---|
| Example 1 | Bottom portion | 5.6 |
| Comparative Example 3 | Lower end of the side wall portion | 5.3 |
| Comparative Example 3 | Middle end of the side wall portion | 5 |
| Comparative Example 3 | Upper end of the side wall portion | 4 |

Through Table 4, it was confirmed that ethylene supply through the supply nozzle 140 located at the bottom portion 122 of Example 1 shows an increased VAE polymerization rate as compared with the ethylene supply through the upper supply nozzle 441, the middle supply nozzle 442 and the lower supply nozzle 443 of Comparative Example 3.

The present disclosure has been described in detail with reference to exemplary embodiments thereof, but the scope of the present disclosure is not limited thereto and modifications and improvements made by those skilled in the part by using the basic concept of the present disclosure, which are defined in the following claims, also belong to the scope of the present disclosure.

### [Description of Reference Numerals]

100: batch reactor
120: cylindrical reactor body
131: rotation shaft
132, 133: curved impeller
140: supply nozzle

## Claims

1. A batch reactor comprising:
a cylindrical reactor body;
a supply nozzle for supplying a raw material;
at least one or more curved impellers; and
a rotating shaft connected to the curved impellers,
wherein the curved impellers comprise bent stirring wings, and the batch reactor is used for a VAE (vinyl acetate-ethylene) polymerization reaction

2. The batch reactor according to claim 1,
wherein the cylindrical reactor body includes a side wall portion, a bottom portion and a cover portion, and
the supply nozzle is connected to the bottom portion.

3. The batch reactor according to claim 1,
wherein the stirring wing is bent in a direction opposite to the rotation direction of the curved impeller in the circumferential direction of the cylindrical reactor body.

4. The batch reactor according to claim 1,
wherein the stirring wing is raised and bent in the height direction of the rotation shaft as it separates farther from the rotating shaft.

5. The batch reactor according to claim 1,
wherein a rotation diameter of the curved impeller is 0.2 to 0.6 times the diameter of the cylindrical reactor body.

6. The batch reactor according to claim 1,
wherein the curved impeller is composed of at least two or more,
the at least two or more curved impellers are arranged to be separated along the height direction of the rotating shaft, and
a ratio of the spacing between the adjacent curved impellers to the rotation diameter of the curved impeller is 2 to 4.

7. The batch reactor according to claim 1,
wherein a diameter of the supply nozzle is between 0.125 and 8 inches.

8. A batch reactor according to claim 1,
wherein the raw material includes ethylene.
